# EUROPEAN PATENT APPLICATION

(11) **EP 2 216 291 A1**
(43) Date of publication of application: **11.08.2010**
(21) Application number: 09001012.5
(22) Date of filing: 26.01.2009
(51) Int. Cl.: C01B 3/36, F23D 14/62

(54) **Process and burner for production of syngas from hydrocarbons**

(71) Applicant: Casale Chemicals S.A., 6900 Lugano-Besso (CH)
(72) Inventor: Zanichelli, Luca, 22010 Grandola ed Uniti (CO) (IT); Bedetti, Gianfranco, 20149 Milano (IT)
(74) Representative: Zardi, Marco

(57) **Abstract**

A burner (10) for the partial oxidation of a hydrocarbon feedstock, comprising a combustion chamber and a premixing chamber (E), and a plurality of annular passages for feeding fuel and oxidizer to the combustion chamber, said plurality of annular passages comprising at least a first annular passage for the fuel, and at least a second coaxial annular passage for the oxidizer, producing a layered flow into the premixing chamber (E). In a preferred embodiment the burner has an annular passage (1) for fuel or oxidizer surrounded by two other passages (2 and 3) for the oxidizer or fuel, respectively; in a further embodiment a start-up burner (20) is integrated with the main process burner, said start-up burner having a combustion chamber (L), a main hub (G) and a swirler (H), and providing a smooth transition from the start-up to the process phase that does not require any mechanical intervention of the pressure vessel/burner assembly and can be performed through automatic control systems.

## Description

### Field of the invention

The invention relates to a burner for hydrocarbons partial oxidation with negligible soot formation. The burner is especially suitable as a burner for the production of a combustible synthesis gas (syngas) from partial oxidation (POX) or autothermal reforming of hydrocarbons.

### Prior art

The production of synthesis gas is performed under high pressure, high temperature and fuel rich conditions, i.e. the amount of oxidizer available being less than the amount required for the complete combustion of the fuel. The synthesis gas can be for example a mixture of gases comprising hydrogen, carbon monoxide, carbon dioxide and traces of methane etc. The partial oxidation or POX process is characterized by high temperature and the absence of a catalytic bed, while in the ATR process the temperature is lower and a catalytic bed is installed in the lower part of the pressure vessel.

The oxidizer stream can be any stream containing oxygen, such as air, oxygen-enriched air or pure oxygen, steam, carbon dioxide or any mixture of them, for example. In the rest of the description, any reference to an oxidizer stream is for exemplificative purpose and may equally be intended as a different oxidizer stream. The fuel stream can be any gaseous or liquid hydrocarbon feedstock (HCF) or a fuel/steam mixture or any other mixture containing a hydrocarbon. For example the fuel stream can be natural gas or a light hydrocarbon.

The formation of soot in flames occurs as a result of the competition between the formation of soot precursors by fuel pyrolysis and the oxidation of these precursors by the hydroxyl radical OH. Under the fuel rich conditions which are typical of POX and ATR, the concentration of OH is much greater than that of oxygen, the concentration of oxygen being generally one order of magnitude less than concentration of the radical OH, and said radical OH suppresses soot formation via oxidative destruction of the precursors.

EP-A-0997433 discloses a burner for partial oxidation of hydrocarbons, designed to reduce the soot formation, comprising a cylindrical conduit defining a circular passageway for oxidizer, a second conduit defining an annular fuel-feeding passage around the oxidizer passageway, and a mixing zone.

The fuel stream is in contact with the oxidizer on its inner surface and with the burner tip on the outer surface. The oxidizer is thus able to diffuse through the fuel layer, achieving a certain degree of pre-mixing before the mixing with the hot re-circulated syngas in the combustion chamber. The tip is designed to obtain a minimum concentration of oxidizer on the outer surface of the fuel layer. By providing a small amount of oxidizer in the outer surface of the fuel stream, this design provides a source of hydroxyl radicals that effectively reduces the formation of soot by removing the soot precursors faster than nucleation.

There is however the need to continuously improve the burners herein considered, especially in the field of syngas production from the partial oxidation (POX) of hydrocarbons, which is a promising process for obtaining a clean fuel from a vast range of hydrocarbon products.

Some technical limitations are encountered when a prior-art burner is scaled to high capacity and/or is used with a light hydrocarbon feedstock, containing hydrogen. Given a pressure drop for the oxidizer and fuel streams, and a fixed size of the fuel annular passage, the size of the oxygen nozzle is proportional to the square root of the load, while the mean diameter of the fuel passage is directly proportional to the load. Hence, a higher load means a greater distance between the air passage and the fuel passage, reducing the efficiency of the pre-mixing process. Moreover, also the thickness of the fuel layer is proportional to the load, for a given pressure drop and mean diameter of the fuel annular passage. This means that the oxidizer must penetrate a thicker layer of fuel and, as a consequence, the pre-mixing is more difficult and some fuel is directly mixed with some re-circulated gas in the combustion chamber. Poor pre-mixing between fuel and oxidizer increases the formation of soot. These disadvantages may be reduced with a longer head, which however is unpractical for high-capacity burners.

Another limitation of the prior art is related to the start-up phase. The start-up is usually performed by heating the refractory lining of the reactor, where the burner is operating, at around 1.000 - 1.200 °C, with the help of an auxiliary start-up burner. Said auxiliary burner replaces the process burner, or an internal part thereof, during the whole start-up phase. Replacement of the burner, or of part of the same, is a potentially dangerous operation, and it is difficult to properly check the tightness of connection between the process burner and the reactor, since there is no time to perform a leakage test before the temperature of the lining drops below 1.000 °C. In absence of a proper leakage test the high-pressure operation is potentially hazardous.

### Summary of the invention

The technical problem underlying the present invention is to improve the efficiency of the pre-mixing process between the fuel and the oxidizer, upstream of the combustion chamber of a burner for the production of syngas from hydrocarbons, in order to overcome the above limitations relating to scale-up and/or use of light hydrocarbons, keeping a low soot formation.

The invention is suitable preferably, but not exclusively, for POX burners and also for ATR burners, where the operating conditions are usually more exposed to the formation of soot.

The idea underlying the invention is to provide at least two coaxial annular passages (annuli), namely a first passage for the fuel flow and a second passage for the oxidizer flow, said at least two annular passages being consecutive in the radial direction, i.e. one close to the other, and open in a premixing chamber. A fuel flow or an oxidizer flow is fed to one of said at least two annular passages, and an oxidizer or fuel flow, respectively, is fed to the other passage, during the operation of the burner, obtaining a layered fuel/oxidizer flow into the premixing chamber.

Accordingly, the aims are reached with a burner for the partial oxidation of a hydrocarbon feedstock, comprising fuel and oxidizer passages and a premixing chamber, the burner being characterized by comprising a plurality of annular passages for the feeding of fuel and oxidizer, said plurality of annular passages comprising at least a first annular passage for feeding a fuel flow, and at least a second annular passage for feeding an oxidizer flow, said first and second annular passages being coaxial and radially consecutive one to the other, and open in said premixing chamber.

Said annular passages are radially consecutive being next one another in the radial direction of the burner. The two passages may be separated, for example, by a cylindrical wall. This feature produces a layered flow in the pre-mixing chamber, with one annular layer (e.g. fuel) next to the other annular layer (e.g. oxidizer).

A further aspect of the invention is to surround the fuel flow with two layers of oxidizer, or vice versa, to allow a more effective pre-mixing within the burner and to prevent direct mixing between fuel and recirculated syngas in the combustion chamber.

Accordingly, in a preferred embodiment of the invention, the burner comprises three coaxial annular passages, said three passages comprising a central passage between an inner passage and an outer passage, open in said premixing chamber; the central passage is connected in use to a fuel input, and the inner passage and outer passage are connected, in use, to an oxidizer input, or vice versa. Hence, during the operation of the burner, one of the fuel flow and oxidizer flow is fed to the central annular passage, and the other of said fuel flow and oxidizer flow is fed to the inner and outer passages.

In a first arrangement, the central annular passage is connected to the fuel input and then is fed with the fuel stream, and both the inner and outer annular passages around the fuel passage carry the oxidizer stream. In a second arrangement, the oxidizer is fed into the central annular passage and the inner and outer passages are connected to the fuel input, i.e. used as fuel passages. Hence, the layered flow in the pre-mixing chamber comprises an annular fuel flow wrapped or enveloped by an inner and an outer annular flows of oxidizer, or an oxidizer flow enveloped between two fuel flows.

Said fuel and oxidizer annular passages have preferably separated inputs, i.e. they can be fed with streams having different compositions. Different oxidizer streams, such as steam and oxygen, can be used in the same embodiment of the invention, the oxidizer streams being fed to at least two of the available annular passages. For example, in the three-passage embodiment as disclosed above, the inner and outer annular passages can receive two different oxidizer-containing streams, such as oxygen/steam mixture in one passage and steam in the other, while the fuel passes through the central passage.

Two or more oxidizer and fuel streams can be alternated to improve the mixing process, thus reducing the required size of the premixing chamber. In order to improve mixing or to accommodate more than two oxidizer or fuel streams, a series of concentric annuli can be provided in the burner. Hence, in a further aspect of the invention, the burner comprises a plurality of coaxial and consecutive annular passages. Preferably, said passages are alternately connected to a fuel input and to at least one oxidizer input, so that in use a plurality of coaxial, alternate oxidizer and fuel streams are delivered to the pre-mixing chamber of the burner. As above, different oxidizers can be accommodated in the available annular passages.

The number of concentric annular passages is not limited to three and can be increased theoretically to any number.

The annular passages are preferably delimited by coaxial annular bodies. Referring for example to a three-annuli embodiment, the burner comprises three main elements, namely an inner body, an intermediate body and an outer body, defining said fuel and oxidizer annular passages. One or more of said bodies can be formed with an internal passage for a cooling fluid. The central passage is defined by the inside of the intermediate body, while the same intermediate body provides the outer surface of the inner channel and the inner surface of the outer channel.

In an embodiment of the invention, at the outlet of the annular passages, the premixing chamber is followed by a premixing nozzle. The flow exiting said nozzle is a fuel/oxidizer mixture that, after leaving said nozzle, mixes with the hot recirculated combustion gas.

It should be noted that the annular passages for the fuel and the oxidizer, in accordance with the invention, leave a central hollow region, around the axis of the burner. According to a further aspect of the invention, a start-up burner is accommodated in said hollow region. More preferably, a portion of the hollow region surrounded by the inner body hosts the start-up burner, while the remaining portion defines a combustion chamber. The start-up burner preferably includes a swirler to impart a rotational motion to the partially premixed stream, forming a re-circulating motion in said combustion chamber and obtaining a stable flame anchoring.

In a preferred embodiment, the start-up burner is integrated with the main burner. The main burner comprises an annular body having a surface with a first portion defining the combustion chamber, and a second portion having a smaller diameter than said first portion, said second portion being shaped to host the start-up burner and to form an outer surface of an oxidizer passage and a pre-mixing channel of the start-up burner itself.

The main advantage achieved by the invention is the layered arrangement of the fuel/oxidizer mixed stream. Referring for example to the embodiment with three annular passages, the invention provides that one component, for example the fuel, is completely surrounded by the other, for example oxidizer. Hence, there is a certain level of pre-mixing within the burner itself and any direct mixing between fuel and recirculated hot syngas, in absence of oxidizer, is prevented. Accurate control of the fuel/oxidizer pre-mixing process is obtained with an appropriate sizing of the annular passages, the downstream premixing chamber and nozzle, The invention allows reaching practically any desired distribution of the oxidizer and fuel in the layer that, after leaving the nozzle, is mixed with the hot recirculated gas.

From the point of view of the operation, an advantage is given by the easy control of the level of premixing between oxidizer and fuel, reducing/avoiding the soot formation in the initial part of the mixing with the hot recirculated syngas.

Another advantage is that the burner is easier to scale with increasing load, because:
i) both the fuel and oxidizer slot mean diameter, i.e. the burner nozzle mean diameter, and the thickness, are scaled with the same function of the load, for a given pressure drop, and
ii) for a given burner diameter and pressure drop, the desired level of pre-mixing can be maintained by appropriate choice of design parameters of the chamber and the nozzle.

These advantages can be at least partly obtained also with a simplified design having two coaxial passages for the fuel and oxidizer, which is slightly less efficient but also less expensive than a design with three (or more) annuli. As stated above, embodiments of the invention are also possible that produce a multi-layered flow with alternate fuel/oxidizer layers in the pre-mixing chamber.

The provision of the integrated start-up burner, according to a preferred aspect of the invention, gives the further advantages of automatic, smooth and quick transition from start-up to process operation. The smooth transition form start-up to process operation requires no manual intervention on the burner or on the pressure vessel, or work on top of the vessel. Moreover, all flanged connections for the installation of the process burner are required on the cold pressure vessel, and all connections and gaskets can be tested in cold conditions.

An aspect of the invention is also the related process for production of a syngas from a hydrocarbon feedstock.

More in detail, one aspect of the invention is a process where a fuel flow comprising a hydrocarbon, and at least one oxidizer flow, are fed to a burner and partially or completely pre-mixed in a premixing chamber of said burner upstream a combustion chamber, the process being **characterized in that:**
- one of said fuel flow and oxidizer flow is fed to said premixing chamber of said burner through at least a first annular passage, and
- the other of said fuel flow and oxidizer flow is fed to the premixing chamber through at least a further annular passage consecutive to the first annular passage,
- forming a layered distribution of fuel and oxidizer in said premixing chamber.

Preferably, one of said fuel flow and oxidizer flow is fed to the premixing chamber through a first annular passage, and the other of said fuel flow and oxidizer flow is fed to the premixing chamber through an inner passage and an outer passage surrounding the first annular passage, thus obtaining said layered distribution.

In one embodiment of the process, the fuel flow is fed to the first passage and oxidizer is fed to said inner and outer passages around. The inner and outer passages can be fed with the same oxidizer flow, or with different flows. Hence, the invention also provides a process where a first oxidizer-containing flow is fed to the inner passage, and a second oxidizer-containing flow is fed to the outer passage surrounding the fuel passage, and said first and second oxidizer-containing flows are different, one being for example oxygen and the other being steam. In another embodiment, the fuel is fed to the inner and outer passages, thus surrounding the oxidizer in the central passage.

The fuel and oxidizer can be fed to the premixing chamber via multiple concentric annular passages, alternating the fuel and oxidizer flows, obtaining a multi-layered distribution formed by alternate fuel and oxidizer streams.

A simplified embodiment is also possible, with two layers only, one of fuel and one of oxidizer, forming the layered flow in the premixing chamber.

In all the embodiments, the hydrocarbon feedstock can be mixed with other non-combustible flows to form said fuel stream; one or more different oxidizer can be used; the fuel is preferably natural gas but other fuels may be used.

Further features and the advantages will become clearer from the following description of an indicative and non-limiting example of embodiments thereof, made with reference to the attached drawings.

### Brief description of the figures

Fig. 1 is a schematic cross section of a burner according to the invention, in a first embodiment.
Fig. 2 is a schematic cross section of a burner according to a second embodiment.
Fig. 3 is a schematic cross section of a burner according to a third embodiment, where the burner has an integrated start-up burner.
Fig. 4 is a cross section of another embodiment with integrated start-up burner.

### Detailed description of the invention

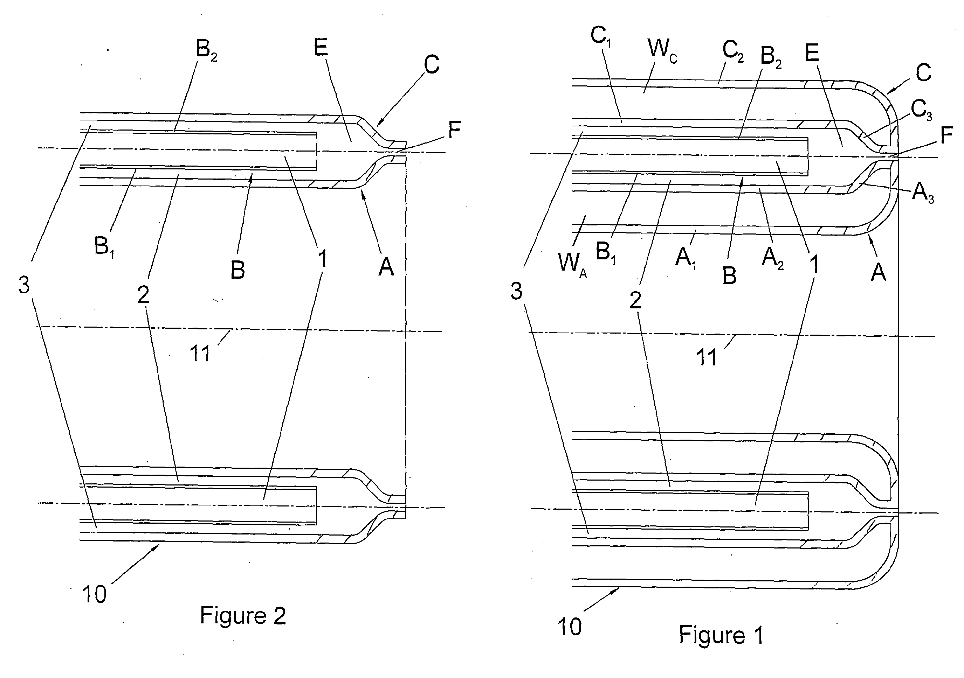

The burner 10 shown in Fig. 1 has three main elements, namely the substantially cylindrical and coaxial bodies A, B and C. The reference 11 indicates the axis of the whole burner 10.

The intermediate body B has substantially two cylindrical and coaxial walls B₁ and B₂, for example coaxial pipes, defining an annular passage 1 around the axis 11.

The inner body A has a double-walled structure, with cylindrical walls A₁ and A₂, defining a chamber W_{A} for a cooling medium. Similarly, the outer body C is formed by walls C₁ and C₂ defining a chamber W_{C} for a cooling medium. The cooling medium is usually water for both chambers W_{A} and W_{C}.

Further annular passages 2 and 3 are defined around the passage 1, between the walls of the intermediate body B and the bodies A and C, namely passage 2 is between the walls B₁ and A₂, and passage 3 is between the walls B₂ and C₁. The burner 10 then comprises three coaxial annular passages 1, 2 and 3, the central passage 1 being surrounded by passages 2 and 3 on the inner and outer side respectively.

The bodies A and C have respective end regions A₃ and C₃, which define the walls of a pre-mixing chamber E downstream the outlet of the passages 1, 2 and 3, and a pre-mixing nozzle F in communication with said chamber E. The passages 1, 2 and 3 are open in said pre-mixing chamber E.

Fig. 2 relates to another embodiment where bodies A and C are single-walled and not fluid-cooled. Also in this embodiment, the passage 1 is surrounded by the passages 2 and 3, the passage 2 being between the wall B₁ and the outer surface of body A, and the passage 3 being between the wall B₂ and the inner surface of body C. The passages 1 to 3 are equally open in the pre-mixing chamber E in communication with the nozzle F.

Choice of the embodiment of Fig. 1 or 2 depends on the operating conditions and materials, e.g. adoption of a material resistant to high temperatures such as Ni/Cr alloys or ceramic makes possible to use the non-cooled embodiment of Fig. 2.

It can be appreciated that the annular passages 1 to 3 are consecutive in the radial direction. In the given example, each annular passage is separated from the next passage by a single wall: the wall B₁ separates the inner passage 2 from passage 1, and the wall B₂ separates passage 1 from the outermost passage 3.

The annular passages 1, 2 and 3 are connected to fuel and oxidizer inputs of the burner 10 (not shown), according to a selected operating condition of the burner. The following are examples of preferred operations:
a) a fuel stream, for example natural gas, is fed to the annular passage 1, and oxidizer is fed to passages 2 and 3, or
b) oxidizer is fed to passage 1 and a fuel stream to passages 2 and 3.

The fuel stream can be a mixture of a fuel, such as natural gas, with a non-combustible flow, such as steam; the oxidizer can be oxygen, steam, carbon dioxide or any mixture of them.

However, further configurations are possible: for example, oxygen and steam in the passage 1, fuel in passage 2 and steam or CO₂ in passage 3, or any combination thereof; fuel in the passage 3, steam in passage 1 and oxygen in passage 2. These examples are not given with limiting purpose, as any permutation of slot number and composition is possible. The passages 1, 2 and 3 have preferably separate inputs, so that different flows can be accommodated, for example two different oxidizers in the option a) or two different fuel streams in the option b).

The examples refer to a three-annuli embodiment, but the number of annular passages can be increased to accommodate more streams. A burner according to the invention can have more elements like the bodies A, B and C and, then, more annular passages for fluid and oxidizer.

In a simplified embodiment of the invention, the burner 10 comprises only two coaxial annular passages for the fuel flow and the oxidizer flow, for example the passages 1 and 2 or 1 and 3. Said two annular passages are one close to the other and open in the premixing chamber E, and connected to a fuel input and an oxidizer input respectively.

The burner 10 can be installed for example on top of a reaction chamber of a gas generator, as disclosed in the cited reference EP0997433.

In use, the annular passages 1 to 3 are in communication with the fuel and oxidizer inputs of the burner 10, receiving a fuel flow and an oxidizer flow, such as for example natural gas and air. Due to arrangement of the passages 1 to 3, a layered flow is obtained in the chamber E, consisting of at least a fuel layer close to an oxidizer layer. In the various embodiments, said layered flow may comprise fuel surrounded by two oxidizer layers or vice versa, or multiple alternate fuel and oxidizer flows. This layered flow gives a certain pre-mixing effect and prevents direct mixing with the re-circulated gas coming from the downstream combustion chamber.

The radially consecutive arrangement of the annular passages, or annuli, 1 to 3, i.e. the fact that the annuli are close one to other in the radial direction and separated only by cylindrical wall B₁ or B₂ at the respective interfaces, allows the aforesaid layered distribution of fuel/oxidizer flows.

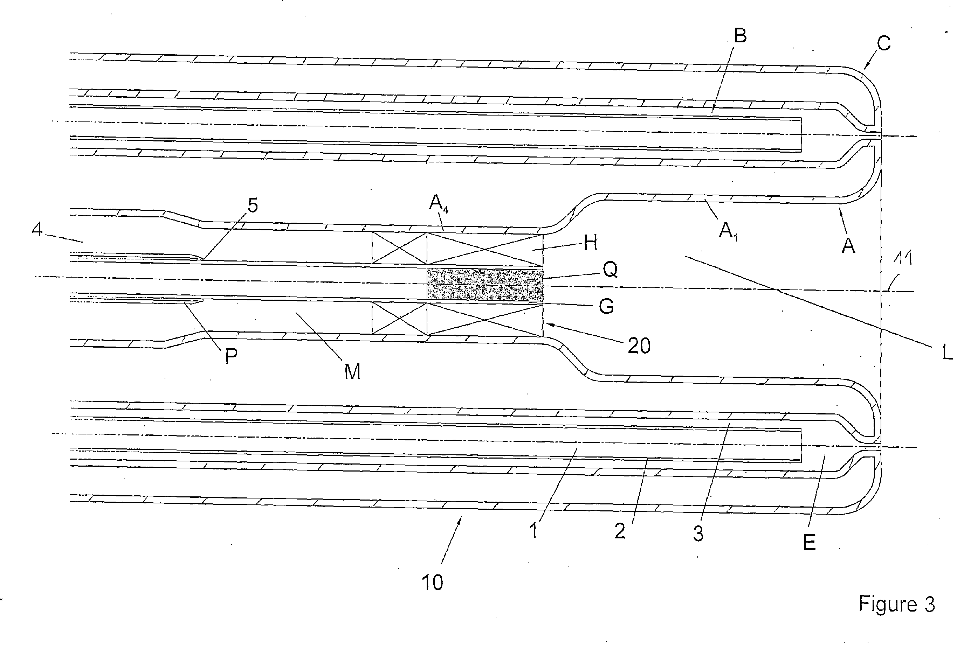

Turning to the variant of Fig. 3, the burner is equipped with a start-up burner 20, including a main hub G and fitted with a swirler H and an ignition device Q. Part of the hollow region inside the inner body A hosts said start-up burner 20, while the remaining part forms a combustion chamber L. The start-up phase is rendered easier and safer by the provision of said integrated start-up burner 20.

In greater detail, and referring to the shown embodiment, the inner surface A₁ of the body A is the wall of the combustion chamber L, and has a central portion A₄ having a smaller diameter, defining an oxidizer passage 4 around the main hub G of the start-up burner 20. The fuel, for example natural gas, flows in a small passage 5 between the main hub G and a pipe P. Downstream the outlet of said fuel passage 5, there is a pre-mixing annular channel M between the wall A₄ and the hub G, for fuel and oxidizer streams coming, respectively, from passages 5 and 4.

In start-up operation, the fuel stream and the oxidizer stream of the start-up burner 20 are mixed in the channel M, forming a partially premixed stream; the swirler H imparts a rotational motion around the axis 11 of the burner to said premixed stream, creating a recirculation in the combustion chamber L. The swirling motion imparted by the swirler H to said partially premixed stream forces the stream to open radially, to follow the expansion from channel M to the larger combustion chamber L delimited by the wall A₁, forming a recirculation motion in the chamber L. The mixture is ignited by an ignition device Q, for example a spark igniter, installed within the hub G. The hub G may also carry an optical access for a flame detection device. The transition from the start-up phase to the process phase of the burner is performed through automatic control systems with no direct human intervention on the start-up and process burners or on the reactor vessel.

It should also be noted that the invention provides a flame-anchoring effect, thanks to the recirculation and swirling movement induced by the swirler H. The flame anchoring allows to turn off the spark igniter of the start-up burner 20 after the start-up phase. Compared to the prior-art, the start-up is then quicker and safer.

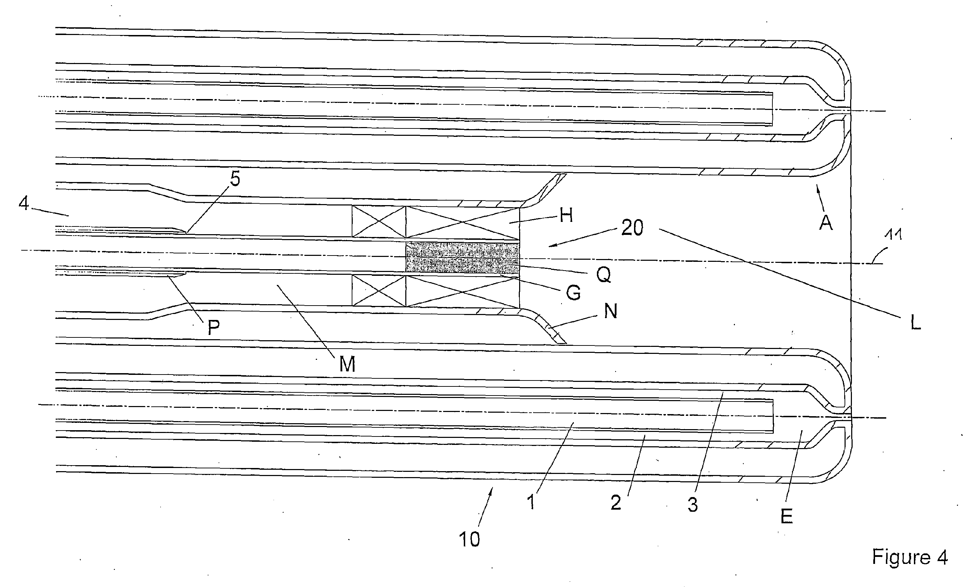

Fig. 3 shows an embodiment where the start-up burner 20 is fully integrated with the main burner 10, as the inner surface A₄ of the body A, which is a structural part of the burner 10, is shaped to form the outer surface of the annular passage 4, the premix chamber M and to host the swirler H. A simplified partly-integrated embodiment is shown in Fig. 4, where the start-up burner 20 is fitted in another pipe element N coaxial with the inner body A, instead of being fitted directly in said body A. This embodiment simplifies the construction of the body A, as the inner surface A₁ does not need to be shaped with the smaller portion A₄ to integrate the start-up burner 20. The fully-integrated embodiment of Fig. 3, however, may be preferred because the double-walled body A provides direct cooling also of the channel M and the swirler H, while the form of Fig. 4 only provides indirect cooling to parts H, M and N.

For the purpose of protection of the start-up burner 20 from the hot syngas during process operation, a minimum safety flow rate of steam is preferably maintained in the passage 4. This minimum safety flow prevents the syngas from entering the start-up burner, protecting it from overheating and metal dusting.

## Claims

1. A burner (10) for the partial oxidation of a hydrocarbon feedstock, comprising fuel and oxidizer passages and a premixing chamber (E), the burner being **characterized by** comprising a plurality of annular passages for the feeding of fuel and oxidizer, said plurality of annular passages comprising at least a first annular passage (1) for feeding a fuel flow, and at least a second annular passage (2; 3) for feeding an oxidizer flow, said annular passages being coaxial and radially consecutive one to the other, and open in said premixing chamber (E).

2. A burner (10) according to claim 1, **characterized in that** said plurality of annular passages comprises a central annular passage (1) between an inner passage (2) and an outer passage (3), said central, inner and outer passages being open in said premixing chamber (E), where the central annular passage (1) is fed with one of the fuel flow and oxidizer flow, and said inner and outer passages (2, 3) are fed with the other of said fuel flow and oxidizer flow, during the operation of the burner.

3. A burner according to claim 1 or 2, where at least some of said annular passages (1, 2, 3) have separate inputs and can be fed with streams having different compositions.

4. A burner according to any of the preceding claims, wherein the annular passages are delimited by the walls of coaxial annular bodies (A, B, C).

5. A burner according to claim 4, wherein at least one of said bodies (A, B, C) of the burner is formed with an internal passage for a cooling medium.

6. A burner according to claim 4 or 5, comprising three main elements, namely an inner body (A), an intermediate body (B) and an outer body (C), defining a central annular passages (1) and an inner (2) and outer (3) annular passages around said central passage (1), for the fuel and the oxidizer.

7. A burner (10) according to any of the preceding claims, further comprising a start-up burner (20) in a central axial region of said burner (10), surrounded by said annular passages (1-3) for the fuel and the oxidizer, said start-up burner (20) being partly or fully integrated with the main burner (10).

8. A burner according to claim 7, where said start-up burner (20) comprises a main hub (G) carrying an ignition device (Q), and a swirler (H); an oxidizer passage (4) is defined around said main hub (G) and a fuel passage (5) between the main hub (G) and a pipe (P); the start-up burner (20) has a pre-mixing channel (M) at the outlet of said oxidizer and fuel passages (4, 5), and the swirler (H) is downstream said pre-mixing channel (M).

9. A burner according to claim 8, comprising an annular body (A) having a surface with a first portion (A1) defining a combustion chamber (L) of said burner, and a second portion (A₄) having a smaller diameter than said first portion, said second portion being shaped to host the start-up burner (20) and to form an outer surface of said oxidizer passage (4) and pre-mixing channel (M).

10. A process for production of a syngas from a hydrocarbon feedstock, where a fuel flow comprising said hydrocarbon and at least one oxidizer flow are fed into a burner (10), and partially or completely pre-mixed in a premixing chamber (E) of said burner, upstream a combustion chamber, the process being **characterized in that:**
- one of said fuel flow and oxidizer flow is fed to said premixing chamber (E) of the burner (10) through at least a first annular passage (1), and
- the other of said fuel flow and oxidizer flow is fed to said premixing chamber (E) through at least a further annular passage (2, 3) coaxial and radially consecutively to the first annular passage (1),
- forming a layered distribution of fuel and oxidizer in said premixing chamber (E).

11. A process according to claim 10, **characterized in that:**
- one of said fuel flow and oxidizer flow is fed to said premixing chamber (E) through a first annular passage (1) of the burner (10), and
- the other of said fuel flow and oxidizer flow is fed to the premixing chamber (E) through an inner passage (2) and an outer passage (3) surrounding the first annular passage (1).

12. A process according to claim 11, where the fuel flow is fed to the first passage (1) and oxidizer is fed to said inner (2) and outer passages (3), or oxidizer is fed to the first passage (1) and a fuel flow is fed to said inner (2) and outer passage (3).

13. A process according to claim 12, where a first oxidizer-containing flow is fed to the inner passage (2), and a second oxidizer-containing flow is fed to the outer passage (3) surrounding the first fuel passage (1), said first and second oxidizer-containing flows having a different composition.

14. A process according to any one of claims 10 to 13, where the fuel flow is a mixture of said hydrocarbon with another non-combustible medium, preferably steam, and said hydrocarbon is preferably natural gas.

15. A process for the production of syngas according to any one of the claims 9 to 14 **characterized in that** the transition from the start-up phase to the process phase of the burner is performed through automatic control systems with no direct human intervention on the start-up and process burners or on the reactor vessel.
